# FASCICULE DE BREVET EUROPEEN

(11) **EP 3 662 563 B1**
(45) Date de publication et mention de la délivrance du brevet: **29.05.2024**
(21) Numéro de dépôt: 18743544.1
(22) Date de dépôt: 30.07.2018
(51) Int. Cl.: H02K 1/26, H02K 3/12, H02K 3/487, H02K 17/16, H02K 17/20

(54) **ROTOR A CAGE INJECTEE**
ROTOR MIT INJIZIERTEM KÄFIG
ROTOR WITH INJECTED CAGE

(30) Priorité: 31.07.2017 FR 1757298
(43) Date de publication de la demande: 10.06.2020
(73) Titulaire: Moteurs Leroy-Somer, 16915 Angouleme Cedex 9 (FR)
(72) Inventeur: PORCHER, Sébastien, 33820 Saint Palais De Blaye (FR); VISSE, Thierry, 16110 BUNZAC (FR); MCCLELLAND, Mike, 16430 Champniers (FR); TURCAT, François, 16330 Montignac Sur Charente (FR)
(74) Mandataire: Cabinet Nony
(86) Numéro de dépôt international: PCT/EP2018/070557
(87) Numéro de publication internationale: WO 2019/025344

(56) Documents cités:
- EP-A1- 2 728 718
- DE-A1-102010 041 796
- JP-A- 2007 295 756
- US-A1- 2014 252 910

## Description

La présente invention concerne les machines électriques tournantes et plus particulièrement les rotors de telles machines.

### Arrière-plan

Les moteurs électriques asynchrones comportent, de façon conventionnelle, un paquet de tôles magnétiques traversé par des encoches. De l'aluminium est injecté sous pression pour former des barreaux qui sont reliés à l'extérieur du paquet de tôles par des anneaux de court-circuit.

Pour améliorer les performances électriques, il peut s'avérer intéressant de diminuer encore la résistivité électrique des barreaux en remplaçant l'aluminium par du cuivre. Toutefois, la température de fusion du cuivre étant bien supérieure à celle de l'aluminium, il devient difficile d'injecter du cuivre dans les encoches.

Une solution connue consiste ainsi à introduire des barres conductrices en cuivre dans les encoches et à injecter de l'aluminium sous pression pour remplir l'espace laissé libre à l'intérieur des encoches par les barres.

Les demandes WO2011015494, WO2010100007, WO2009038678, US2011291516, WO2014067792, WO2011020788, WO2015071156, WO2012041943, JPH10234166, CN1925280, JPH11206080, JP2005278373, JPH1028360 décrivent des rotors dont le paquet de tôles comporte des encoches recevant des barres de cuivre et dans lesquelles de l'aluminium est injecté sous pression.

La demande WO2012041943 divulgue un rotor à cage dont les barres conductrices comportent des rainures destinées à favoriser le déplacement des barres vers le fond des encoches sous effet de la pression d'injection. Cette demande indique également que les rainures favorisent la tenue des anneaux de court-circuit.

La demande CN1925280 divulgue un rotor ayant des encoches qui comportent des reliefs pour maintenir les barres dans le fond des encoches.

EP 2 728 718 divulgue un rotor comportant des barres conductrices disposées dans des encoches. Ces encoches comportent des protubérances pour permettre de positionner les barres via des creux correspondants sur ces dernières.

DE 10 2010 041796 divulgue des barres conductrices comportant des rainures sur les surfaces radiales permettant d'augmenter la surface de contact entre l'aluminium coulé et les barres de cuivre.

US 2014/252910 divulgue des barres conductrices reçues dans des encoches formées au sein d'un paquet de tôles. Les encoches peuvent comporter des parties de fixation présentes sur les surfaces radiales des encoches.

JP 2007/295756 divulgue un rotor comportant des barres conductrices reçues dans des encoches formées au sein d'un paquet de tôles. Les encoches peuvent comporter des protubérances.

### Résumé

L'injection de l'aluminium sous pression dans le paquet de tôles pose le problème du maintien des barres dans les encoches durant cette opération.

L'invention vise à résoudre ce problème et ainsi à perfectionner encore les rotors comportant des barres d'un premier matériau électriquement conducteur et un deuxième matériau électriquement conducteur injecté dans les encoches autour de ces barres.

L'invention a pour objet, selon un premier de ses aspects, un rotor pour machine électrique tournante selon la revendication 1, comportant :
- un paquet de tôles magnétiques présentant chacune des ajours, la superposition de ces ajours au sein du paquet formant des encoches, au moins une partie des ajours présentant sur au moins une partie de leur pourtour des reliefs de friction,
- des barres électriquement conductrices d'un premier matériau, reçues dans au moins une parties des encoches et venant en appui par au moins une face principale contre lesdits reliefs.

Grâce à l'invention, il est possible de maintenir efficacement les barres à l'intérieur du paquet de tôles. Les reliefs peuvent être réalisés très précisément lors du découpage des tôles, et permettent une plus grande tolérance de section des barres.

En particulier, lorsqu'un deuxième matériau est injecté dans les encoches autour des barres, ces dernières peuvent demeurer immobiles au sein du paquet. Les reliefs peuvent également réduire la force à exercer sur les barres pour les insérer dans le paquet de tôles.

Les reliefs peuvent encore, en diminuant la surface de contact entre les barres et les tôles, réduire les courants inter-barres circulant dans les tôles et la perte d'énergie correspondante par effet Joule.

Les reliefs de friction sont présents sur des grands côtés opposés des encoches et les barres conductrices viennent en appui contre ces reliefs par deux faces principales opposées.

Les reliefs de friction se présentent sous la forme de bossages, s'étendant de préférence sur sensiblement toute la dimension radiale d'une barre. De préférence, les barres ne comportent pas de creux correspondants pour recevoir les reliefs de friction.

Les bossages présentent une amplitude comprise entre 0,2 et 0,4 mm.

Toutes les tôles du paquet peuvent être identiques. Les tôles du paquet peuvent être identiques sur toute la longueur du paquet, sauf potentiellement les tôles aux extrémités du paquet. Cela permet de mieux maintenir les barres. Cela permet également de faciliter la gestion des tôles pendant la production du rotor.

De préférence, les reliefs de friction ne sont pas déformables. Par exemples, les reliefs de friction ne sont pas déformés par l'introduction des barres. Les barres, notamment en cuivre, peuvent être déformées ou lacérées par les reliefs de friction lors de leur introduction.

Au moins une tôle du paquet peut présenter au moins un relief de blocage venant en appui contre une face d'extrémité radialement extérieure d'une barre correspondante, et mieux deux tels reliefs opposés, venant chacun en appui contre la même face d'extrémité.

Au moins une tôle du paquet peut présenter au moins un relief de blocage venant en appui contre une face d'extrémité radialement intérieure d'une barre correspondante, ce relief de blocage étant de préférence centré sur le plan médian de l'ajour correspondant.

Les encoches sont de préférence remplies autour des barres par le deuxième matériau électriquement conducteur, injecté dans les encoches, et de préférence moins bon conducteur électrique que le premier. Cela permet de faciliter l'injection du deuxième matériau dans les encoches, de limiter le contact entre les tôles magnétiques et les barres afin de limiter les pertes supplémentaires et de réduire le niveau potentiel de vibration de la barre dans son encoche par le collage/blocage de celle-ci par ce second matériau.

De préférence, le premier matériau est du cuivre et le deuxième matériau de l'aluminium.

Le deuxième matériau peut s'étendre dans chaque encoche dans la direction radiale intérieurement et extérieurement par rapport à la barre contenue dans cette encoche.

De préférence, les tôles magnétiques comportent un acier magnétique, par exemple fer/silicium avec ses différentes nuances. L'épaisseur de chaque tôle est par exemple comprise entre 0,35mm et 0,65mm.

Par exemple, le deuxième matériau vient en contact avec les faces d'extrémité radialement intérieure et radialement extérieure des barres, dans le haut et dans le fond des encoches.

L'invention a aussi pour objet une machine électrique tournante, comportant un rotor selon l'invention.

### Description des figures

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique, en section axiale, un exemple de rotor selon l'invention,
- les figures 2A à 2E illustrent des variantes de réalisation des encoches,
- la figure 3 représente un détail de réalisation d'une encoche,
- les figures 4A à 4C illustrent des variantes de réalisation des encoches qui ne sont pas limitatives,
- la figure 5 représente dans une vue analogue à la figure 1, une variante de rotor selon l'invention, et
- les figures 6A et 6B illustrent des variantes de réalisation des tôles.

### Rotor

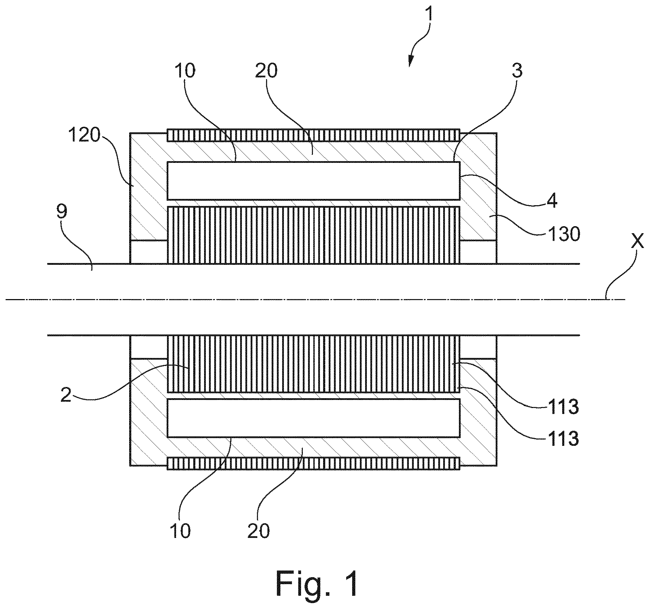

On a représenté à la figure 1 un rotor 1 selon l'invention. Ce rotor 1 comporte un paquet de tôles magnétiques 2, montées sur un arbre 9, par exemple en acier, d'axe X.

Le paquet 2 est formé par la superposition de tôles magnétiques 113 dans lesquelles sont découpés des ajours 3.

La superposition des ajours 3 des tôles 113 forme, au sein du paquet 2, des encoches 4 qui s'étendent longitudinalement d'une extrémité axiale du paquet 2 à l'autre. Les encoches 4 peuvent être droites, c'est-à-dire que toutes les tôles 2 sont exactement superposées sans décalage angulaire d'une tôle 113 à la suivante. Toutefois, de préférence, les tôles 113 sont superposées en étant décalées angulairement légèrement d'une tôle à la suivante de telle sorte que les axes longitudinaux des encoches 4 suivent un trajet hélicoïdal autour de l'axe de rotation du rotor, de façon connue en soi.

Dans l'exemple illustré, toutes les tôles 113 sont identiques et les ajours 3 le sont également, de sorte que le paquet 2 comporte des encoches 4 identiques. Dans des variantes, le paquet 2 est formé par assemblage de tôles 113 qui ne sont pas rigoureusement toutes identiques en vue de face, de l'avant du paquet 2, de sorte que la section d'une encoche 4 peut présenter une forme qui varie lorsque l'on se déplace de l'extrémité avant de l'encoche 4 à l'extrémité arrière. En particulier, les tôles 113 peuvent être identiques lorsqu'elles sont découpées, mais être assemblées en retournant certaines tôles par rapport à d'autres, de telle sorte qu'elles génèrent une évolution de la section de l'encoche 4 lorsque l'on se déplace le long de l'axe de rotation.

Le rotor 1 comporte des barres 10 en cuivre, introduites dans les encoches 4, et un matériau 20, tel que de l'aluminium, injecté dans les encoches 4 dans l'espace laissé libre par les barres 10.

Des anneaux de court-circuit 120 et 130 sont moulés en aluminium aux extrémités du paquet de tôles 2. Ces anneaux 120 et 130 sont d'une seule pièce avec l'aluminium coulé dans les encoches 4.

### Encoches avec reliefs de friction

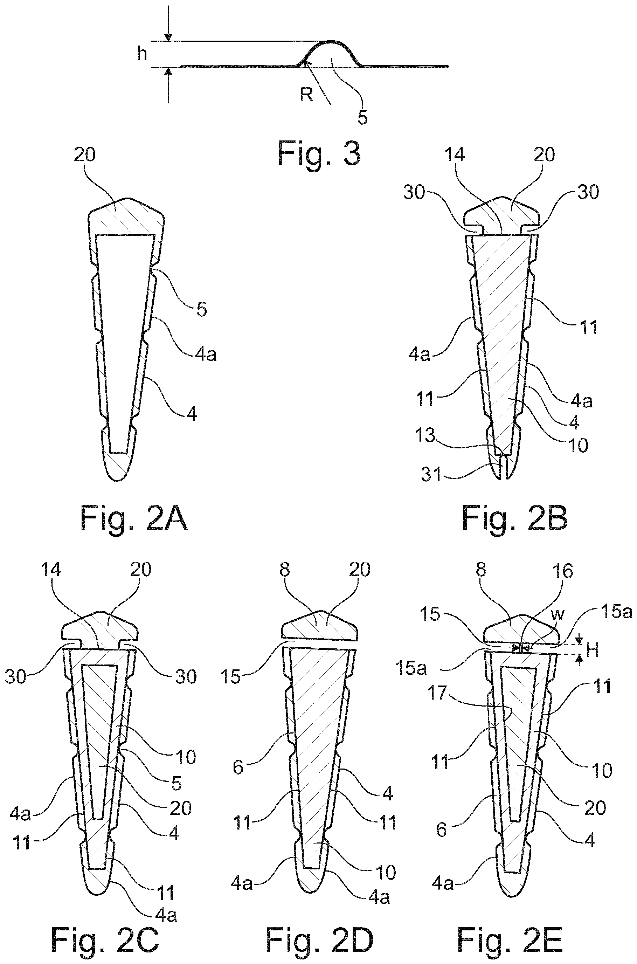

Dans l'exemple des figures 2A à 2E, les encoches 4 sont réalisées avec sur une partie de leur pourtour des bossages 5. Ces bossages sont présents sur les grands côtés opposés 4a de l'encoche 4, ces grands côtés s'étendant sensiblement radialement.

Les dimensions des barres 10 sont choisies de telle sorte qu'elles viennent en appui par leurs faces principales opposées 11 contre les bossages 5, avec un serrage suffisant pour que les barres 10 soient immobilisées par friction au sein du paquet de tôles.

Dans l'exemple illustré, les barres 10 présentent une section généralement trapézoïdale et les faces principales 11 sont planes et convergent vers le centre du rotor. Ces faces principales 11 viennent au contact des bossages 5 sur sensiblement toute leur dimension radiale.

Comme illustré à la figure 3, les bossages 5 peuvent présenter une amplitude comprise entre 0,2 et 0,4 mm, par exemple de 0,3mm. Les bossages 5 peuvent être de forme arrondie ayant un rayon de courbure R à leur sommet compris entre 0,4 et 0,6mm, par exemple de 0,5mm.

Dans l'exemple de la figure 2A notamment, le serrage des barres 10 au sein des encoches 4 est suffisant pour immobiliser chaque barre à la fois axialement dans la direction de l'axe de rotation du rotor et radialement. Les barres peuvent ainsi résister sans bouger à la pression d'injection de l'aluminium 20 dans le paquet de tôles.

### Encoches avec reliefs de blocage

Toutefois, il peut être souhaitable de réaliser des reliefs de blocage additionnels dans au moins une partie des tôles du paquet, comme illustré aux figures 2B et 2C.

Sur ces figures, chaque tôle 113 présente, au niveau de chaque encoche 4, deux reliefs de blocage opposés 30 qui sont dirigés l'un vers l'autre et qui viennent en appui contre la face radialement extérieure 14 de la barre 10 correspondante.

Un relief de blocage 31 peut également être réalisé dans le fond de l'encoche, pour venir en appui contre la face d'extrémité radialement intérieure 13 de la barre 10, comme illustré à la figure 2B. Ce relief de blocage 31 peut être centré sur le plan médian M de l'ajour associé à l'encoche. D'une façon générale, chaque tôle peut être découpée avec des ajours qui présentent chacun une forme symétrique par rapport à un plan médian radial M.

### Encoches avec reliefs de séparation

Comme illustré aux figures 2D et 2E, des reliefs de séparation 15 peuvent s'étendre au sein des ajours et séparer les encoches 4 en des premiers 6 et deuxièmes compartiments 8 distincts, les premiers compartiments 6 étant radialement intérieurs par rapport aux seconds compartiments 8.

Les barres conductrices 10 du premier matériau peuvent être disposées dans les premiers 6 ou les deuxièmes 8 compartiments d'une partie au moins des encoches 4. Le deuxième matériau électriquement conducteur, différent du premier, peut alors être disposé dans les deuxièmes 8 ou les premiers 6 compartiments de ces encoches 4, les reliefs de séparation 15 qui s'étendent au sein des ajours empêchant les premier et deuxième matériaux de venir en contact.

Les barres 10 qui sont introduites dans le paquet de tôles peuvent être maintenues au sein des compartiments correspondants par les reliefs de séparation 15. Ces derniers sont agencés de façon à empêcher les premier et deuxième matériaux de venir en contact. Ainsi, les phénomènes potentiels de corrosion sont éliminés.

Les reliefs de séparation 15 peuvent être de différentes formes, étant réalisés par découpe avec la matière des tôles magnétiques.

Par exemple, les reliefs de séparation 15 sont des ponts de matière qui séparent chaque encoche en des premier et deuxième compartiments non communicants, comme illustré à la figure 2D.

Dans la variante de la figure 2E, les reliefs de séparation 15 sont constitués par des avancées 15a disposées en regard l'une de l'autre et qui ménagent entre elles un canal 16 suffisamment étroit pour empêcher un contact entre les premier et deuxième matériaux. Par exemple, lorsque les premiers compartiments sont remplis par injection d'aluminium en fusion, des canaux ayant une largeur w inférieure à 0,6 mm et une hauteur H inférieure à 2 mm peuvent empêcher l'aluminium d'entrer dans les deuxièmes compartiments à travers les canaux, et vice versa.

Une réalisation où les barres conductrices du premier matériau sont insérées dans les premiers compartiments, le premier matériau étant de préférence du cuivre, le deuxième matériau étant injecté dans les deuxièmes compartiments, ce deuxième matériau étant de préférence de l'aluminium, convient tout particulièrement à une machine destinée à être entraînée avec un courant de fréquence fixe. En effet, lorsque le moteur est connecté au réseau, le démarrage du moteur demande un courant élevé par rapport au point nominal. Le rapport entre le courant de démarrage et le courant nominal étant limité par les normes en vigueur, le but est de le réduire. Au démarrage, la partie de l'encoche qui génère la résistance électrique est surtout le haut de l'encoche, près de l'entrefer en raison de l'effet de peau. Afin de limiter ce courant de démarrage, la résistance de la cage doit augmenter. Ainsi, le fait d'avoir le matériau de plus forte résistivité électrique plus près de l'entrefer permet de réduire le courant de démarrage.

Une variante de réalisation où les barres conductrices du premier matériau sont insérées dans les deuxièmes compartiments, ce premier matériau étant de préférence du cuivre, le deuxième matériau étant injecté dans les premiers compartiments, ce deuxième matériau étant de préférence de l'aluminium, convient plus particulièrement à un moteur connecté à un variateur, pour un entraînement à vitesse variable. Dans ce cas, le courant de démarrage n'est pas une contrainte. Le fait de positionner le matériau de moindre résistivité électrique dans le compartiment plus près de l'entrefer et le cas échéant d'introduire une ouverture, notamment sous forme de fente, du côté de l'entrefer qui est dépourvu de matériau conducteur électrique, permet de réduire les pertes électriques. De plus, la présence d'une barre dans la partie supérieure de l'encoche empêche le deuxième matériau de couler dans l'ouverture éventuelle de l'encoche du côté de l'entrefer lors de l'injection.

### Barres creuses

Dans les variantes illustrées aux figures 2C et 2E, les barres sont creuses et présentent une cavité intérieure longitudinale 17 qui est remplie par le deuxième matériau.

Le fait que les barres 10 soient creuses facilite le remplissage de la cavité servant à mouler l'anneau de court-circuit arrière, lorsque l'injection a lieu par l'avant.

De plus, la quantité totale de cuivre utilisée peut être moindre, ce qui permet de réduire le coût de la machine.

Le deuxième matériau qui est injecté au sein des barres se trouve protégé du contact avec l'oxygène de l'air par le matériau des barres, sauf aux extrémités axiales de celles-ci. On limite de cette façon les phénomènes de corrosion à l'interface entre les premier et deuxième matériaux.

Les barres 10 présentent de préférence, en section transversale, un contour fermé, qui peut être non circulaire.

De préférence, le deuxième matériau 20 remplit les encoches également à l'extérieur des barres, notamment lorsque les barres 10 n'occupent pas toute la section des encoches.

Les barres 10, creuses ou non, peuvent s'étendre sur toute la dimension radiale des encoches. En particulier, les barres peuvent avoir une section transversale qui est sensiblement de même forme que les encoches.

En variante, les barres 10, creuses ou non, ont une dimension radiale qui est moindre que celle des encoches.

Les barres, creuses ou non, peuvent s'étendre sur au moins la longueur du paquet de tôles.

Toutes les encoches du rotor peuvent comporter des barres creuses avec le deuxième matériau injecté à l'intérieur. En variante, certaines encoches peuvent ne pas comporter de barre, étant dans ce cas entièrement remplies par le deuxième matériau conducteur. Le rotor comporte par exemple plus d'encoches avec des barres que d'encoches sans barre, ou inversement.

### Encoches sans barres

Dans une variante, les barres sont présentes dans une partie seulement des encoches.

L'absence de barres dans certaines encoches permet de conserver une section totale plus importante pour le passage de l'aluminium injecté, et ainsi de faciliter le remplissage de la bague arrière lorsque l'injection se fait par l'avant.

La présence de barres en un matériau de moindre résistance électrique tel que du cuivre dans certaines encoches améliore les performances électriques. Il est possible, en choisissant le nombre de barres rajoutées, d'optimiser l'accroissement des performances au regard du coût de la machine, le cuivre étant plus coûteux que l'aluminium.

Le rotor peut comporter plus d'encoches avec des barres que d'encoches sans barres. Dans d'autres variantes, c'est le contraire et le rotor comporte plus d'encoches sans barres qu'avec barres.

De multiples dispositions des barres au sein des encoches sont possibles. Par exemple, on peut faire alterner dans le sens circonférentiel une encoche sans barre et une encoche avec barre. On peut également faire alterner de façon plus générale n₁ encoches sans barre avec n₂ encoches avec barre, n₁ et n₂ étant des entiers strictement supérieurs à 1.

### Encoches secondaires

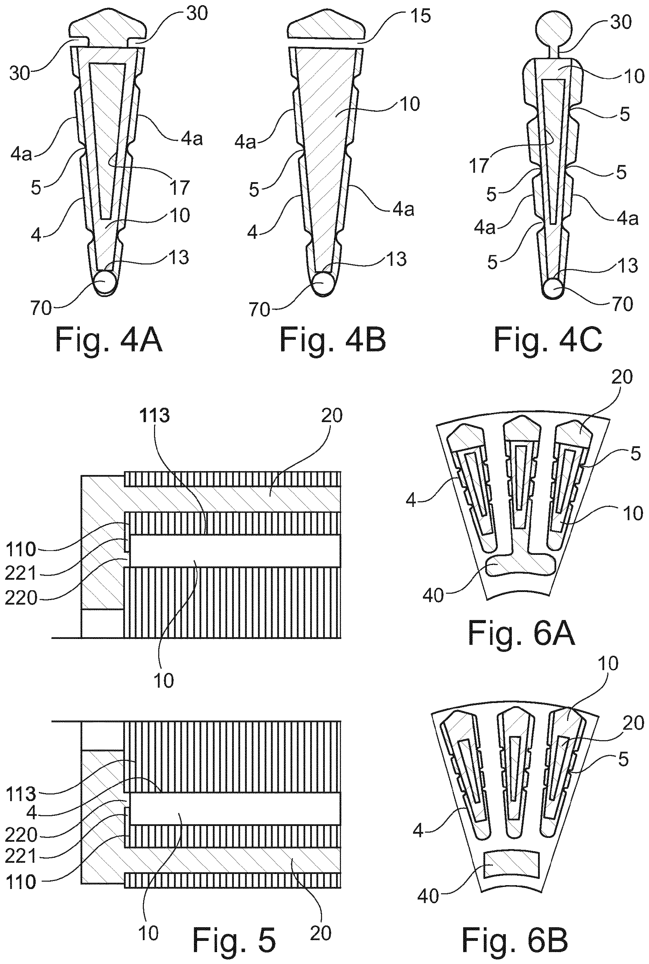

Comme illustré aux figures 6A et 6B, les ajours peuvent former au sein du paquet *n* encoches principales 4 telles que définies dessus et *m* encoches secondaires 40, radialement intérieures par rapport aux encoches principales, avec *n* et *m* entiers non nuls et *n*>*m.*

Des barres 10 du premier matériau conducteur électrique, de préférence du cuivre, sont disposées dans au moins une partie des encoches principales 4 et un deuxième matériau conducteur électrique 20, différent du premier, de préférence de l'aluminium, est injecté dans les encoches secondaires 40.

On bénéficie grâce aux encoches secondaires 40 d'une plus grande section de passage pour le deuxième matériau conducteur 20, lors de l'injection. Ce dernier étant injecté depuis l'avant, le fait d'avoir une section de passage plus grande assure la réalisation sans défaut de l'anneau de court-circuit arrière.

Les encoches secondaires 40 sont disjointes des encoches principales 4 dans l'exemple de la figure 6A.

Dans la variante illustrée à la figure 6B, chaque encoche secondaire 40 communique avec une encoche principale 4.

Chaque encoche secondaire 40 peut être centrée sur un plan médian d'une encoche principale 4.

Le rapport *n*/*m* entre le nombre d'encoches principales 4 et le nombre d'encoches secondaires 40 est par exemple égal à 2 ou 3.

Les encoches secondaires 40 ont de préférence une étendue angulaire, mesurée autour du centre du paquet de tôles, supérieure à celle d'une encoche principale 4.

### Eléments de blocage

La machine peut comporter des goupilles ou rivets 70 insérés dans les encoches au contact des barres.

Comme illustré aux figures 4A à 4C, ces goupilles ou rivets 70 sont disposés dans le fond des encoches 4, pour venir en appui contre la face d'extrémité radialement intérieure 13 des barres 10.

Les goupilles ou rivets 70 peuvent être de forme conique.

### Tôle de garde

Le paquet 2 peut comporter comme représenté à la figure 5 au moins une tôle de garde 110 à l'une au moins de ses extrémités axiales, de préférence à chacune des extrémités axiales. Des barres 10, mieux toutes les barres, viennent en appui à une extrémité axiale contre cette tôle de garde 110.

La présence de la ou des tôles de garde 110 permet un maintien à au moins une extrémité des barres 10, par appui contre la ou les tôles de garde 110.

Au moins une tôle de garde 110, et de préférence chaque tôle de garde 110, est réalisée avec des ajours 220 qui permettent l'injection à travers la tôle de garde 110 du deuxième matériau 20 dans le paquet 2 de tôles 113. Ainsi, la présence des tôles de garde 110 ne gêne pas outre mesure l'injection du deuxième matériau 20, tout en contribuant au maintien efficace des barres 10 introduites dans les encoches 4 jusqu'à l'opération d'injection.

La ou les tôles de garde peuvent comporter au moins un relief de maintien 221 se superposant au moins partiellement aux barres 10 pour les retenir axialement. Ce relief de maintien 221 peut être réalisé de diverses manières.

Dans des exemples de réalisation, le ou chaque relief de maintien 221 est formé par deux avancées en regard, par encoche recevant une barre 10. Ces avancées se superposent aux barres 10. Dans des variantes de réalisation, le ou chaque relief de maintien 221 comporte un pont de matière par encoche recevant une barre 10.

### Fabrication du rotor

Pour fabriquer le rotor, on peut découper les tôles 113 avec une presse équipée d'un poinçon ou au laser et former, lors du découpage, des ajours 3 correspondant aux encoches 4 et, le cas échéant, les bossages 5.

Ensuite, les tôles 113 sont superposées pour former le paquet 2 puis les barres 10 sont insérées dans les encoches 4 à force. Lors de l'insertion, la présence des bossages 5 facilite l'avancement des barres 10 au sein du paquet 2 de tôles 113 et le cas échéant, des goupilles ou rivets 70 sont insérés dans le fond des encoches 4 pour bloquer les barres 10 avant l'injection. Une fois les barres 10 mises en place, on peut procéder dans une presse à l'injection du deuxième matériau 20, à savoir l'aluminium. On peut réaliser, lors de l'injection, les anneaux de court-circuit par moulage.

Bien entendu, l'invention n'est pas limitée aux exemples qui viennent d'être décrits.

Par exemple, les encoches peuvent avoir d'autres formes, de même que les barres.

D'autres matériaux que le cuivre et l'aluminium peuvent être utilisés.

## Revendications

1. Rotor (1) pour machine électrique tournante, comportant :
- un paquet (2) de tôles magnétiques (113) présentant chacune des ajours (3), la superposition de ces ajours (3) au sein du paquet (2) formant des encoches (4), au moins une partie des ajours (3) présentant sur au moins une partie de leur pourtour des reliefs de friction (5),
- des barres électriquement conductrices (10) d'un premier matériau, reçues dans au moins une partie des encoches (4) et venant en appui par au moins une face principale (11) contre lesdits reliefs de friction (5), les reliefs de friction (5) étant présents sur des grands côtés (4a) opposés des encoches (4) et qui s'étendent radialement, et les barres électriquement conductrices (10) venant en appui contre ces reliefs de friction (5) par deux faces principales opposées (11) planes et qui convergent vers le centre du rotor (1), avec un serrage suffisant pour que les barres électriquement conductrices (10) soient immobilisées par friction au sein du paquet (2) de tôles magnétiques (113),
**caractérisé en ce que** les reliefs de friction (5) se présentent sous la forme de bossages présentant une amplitude (h) comprise entre 0,2 et 0,4 mm, chaque face principale (11) venant en appui contre des bossages.

2. Rotor (1) selon la revendication 1, les barres électriquement conductrices (10) n'étant en contact avec les grands côtés opposés (4a) d'une encoche que via les reliefs de friction (5).

3. Rotor (1) selon l'une quelconque des revendications précédentes, comportant un deuxième matériau (20) injecté dans les encoches (4) dans l'espace laissé libre par les barres électriquement conductrices (10).

4. Rotor (1) selon l'une quelconque des revendications précédentes, toutes les tôles magnétiques (113) du paquet (2) étant identiques sur toute la longueur du paquet (2), sauf potentiellement des tôles de garde (110) aux extrémités axiales du paquet (2).

5. Rotor (1) selon l'une quelconque des revendications précédentes, au moins une tôle magnétiques (113) du paquet (2) présentant au moins un relief de blocage (30) venant en appui contre une face d'extrémité radialement extérieure (14) d'une barre électriquement conductrices (10) correspondante, mieux deux tels reliefs (30) opposés venant chacun en appui contre la même face d'extrémité (14).

6. Rotor (1) selon l'une quelconque des revendications précédentes, au moins une tôle magnétiques (113) du paquet (2) présentant au moins un relief de blocage (31) venant en appui contre une face d'extrémité radialement intérieure (13) d'une barre électriquement conductrices (10) correspondante, ce relief de blocage (31) étant de préférence centré sur un plan médian (M) de l'ajour correspondant.

7. Rotor (1) selon l'une quelconque des revendications précédentes, les encoches (4) étant remplies autour des barres électriquement conductrices (10) par un deuxième matériau (20) électriquement conducteur, injecté dans les encoches (4), de préférence de l'aluminium.

8. Rotor (1) selon la revendication précédente, le deuxième matériau (20) s'étendant dans chaque encoche (4) à la fois radialement intérieurement et radialement extérieurement par rapport à la barre électriquement conductrice (10) contenue dans cette encoche (4)

9. Rotor (1) selon la revendication 8, le deuxième matériau (20) venant en contact avec les faces d'extrémité radialement intérieure (14) et radialement extérieure (13) des barres électriquement conductrice (10).

10. Rotor (1) selon l'une quelconque des revendications précédentes, le premier matériau étant du cuivre.

11. Machine électrique tournante, comportant un rotor (1) selon l'une quelconque des revendications précédentes.

## Patentansprüche

1. Rotor (1) für eine rotierende elektrische Maschine, umfassend:
- ein Paket (2) von Magnetblechen (113), die jeweils Durchbrechungen (3) aufweisen, wobei die Übereinanderschichtung dieser Durchbrechungen (3) im Inneren des Pakets (2) Nuten (4) bildet, wobei wenigstens ein Teil der Durchbrechungen (3) auf wenigstens einem Teil ihres Umfangs Reibungserhöhungen (5) aufweist,
- elektrisch leitende Stäbe (10) aus einem ersten Material, die in wenigstens einem Teil der Nuten (4) aufgenommen sind und mit wenigstens einer Hauptfläche (11) an den Reibungserhöhungen (5) zur Anlage kommen, wobei die Reibungserhöhungen (5) auf einander gegenüberliegenden großen Seiten (4a) der Nuten (4) vorhanden sind, die sich radial erstrecken, und wobei die elektrisch leitenden Stäbe (10) an diesen Reibungserhöhungen (5) mit zwei einander gegenüberliegenden ebenen Hauptflächen (11) zur Anlage kommen, die zur Mitte des Rotors (1) hin zusammenlaufen, mit einer Klemmung, die ausreichend ist, damit die elektrisch leitenden Stäbe (10) im Inneren des Pakets (2) von Magnetblechen (113) durch Reibung festgehalten werden, **dadurch gekennzeichnet, dass** die Reibungserhöhungen (5) in der Form von Höckern vorliegen, die eine Amplitude (h) zwischen 0,2 und 0,4 mm aufweisen, wobei jede Hauptfläche (11) an Höckern zur Anlage kommt.

2. Rotor (1) nach Anspruch 1, wobei die elektrisch leitenden Stäbe (10) sich nur über die Reibungserhöhungen (5) in Kontakt mit den einander gegenüberliegenden großen Seiten (4a) einer Nut befinden.

3. Rotor (1) nach einem der vorhergehenden Ansprüche, welcher ein zweites Material (20) umfasst, das in den Nuten (4) in den Zwischenraum eingespritzt ist, der von den elektrisch leitenden Stäben (10) frei gelassen wird.

4. Rotor (1) nach einem der vorhergehenden Ansprüche, wobei alle Magnetbleche (113) des Pakets (2) auf der gesamten Länge des Pakets (2) identisch sind, eventuell mit Ausnahme der Schutzbleche (110) an den axialen Enden des Pakets (2).

5. Rotor (1) nach einem der vorhergehenden Ansprüche, wobei mindestens ein Magnetblech (113) des Pakets (2) mindestens eine Blockiererhebung (30) aufweist, die an einer radial äußeren Endfläche (14) eines entsprechenden elektrisch leitenden Stabes (10) zur Anlage kommt, besser zwei einander gegenüberliegende derartige Erhebungen (30), die jeweils an derselben Endfläche (14) zur Anlage kommen.

6. Rotor (1) nach einem der vorhergehenden Ansprüche, wobei mindestens ein Magnetblech (113) des Pakets (2) mindestens eine Blockiererhebung (31) aufweist, die an einer radial inneren Endfläche (13) eines entsprechenden elektrisch leitenden Stabes (10) zur Anlage kommt, wobei diese Blockiererhebung (31) vorzugsweise auf einer Mittelebene (M) der entsprechenden Durchbrechung zentriert ist.

7. Rotor (1) nach einem der vorhergehenden Ansprüche, wobei die Nuten (4) um die elektrisch leitenden Stäbe (10) herum mit einem zweiten elektrisch leitenden Material (20) gefüllt sind, das in die Nuten (4) eingespritzt ist, vorzugsweise mit Aluminium.

8. Rotor (1) nach dem vorhergehenden Anspruch, wobei das zweite Material (20) sich in jeder Nut (4) gleichzeitig radial innen und radial außen in Bezug auf den in dieser Nut (4) enthaltenen elektrisch leitenden Stab (10) erstreckt.

9. Rotor (1) nach Anspruch 8, wobei das zweite Material (20) mit der radial inneren (14) und der radial äußeren Endfläche (13) der elektrisch leitenden Stäbe (10) in Kontakt kommt.

10. Rotor (1) nach einem der vorhergehenden Ansprüche, wobei das erste Material Kupfer ist.

11. Rotierende elektrische Maschine, welche einen Rotor (1) nach einem der vorhergehenden Ansprüche umfasst.

## Claims

1. Rotor (1) for a rotary electric machine, comprising:
- a stack (2) of magnetic laminations (113) each having openings (3), the superposition of these openings (3) within the stack (2) forming slots (4), at least some of the openings (3) having, on at least part of their periphery, friction reliefs (5),
- electrically conducting bars (10) made of a first material, received in at least part of the slots (4) and coming to bear via at least one principal face (11) against said friction reliefs (5), the friction reliefs (5) being present on opposite long sides (4a) of the slots (4) and which extend radially, and the electrically conducting bars (10) coming to bear against these friction reliefs (5) via two flat opposite principal faces (11) which converge towards the centre of the rotor (1) with clamping that is firm enough that the electrically conducting bars (10) are immobilized by friction within the stack (2) of magnetic laminations (113), **characterized in that** the friction reliefs (5) take the form of bosses having an amplitude (h) of between 0.2 and 0.4 mm, each principal face (11) coming to bear against the bosses.

2. Rotor (1) according to Claim 1, the electrically conducting bars (10) being in contact with the opposite long sides (4a) of a slot only via the friction reliefs (5) .

3. Rotor (1) according to either one of the preceding claims, comprising a second material (20) injected into the slots (4) in the space left empty by the electrically conducting bars (10).

4. Rotor (1) according to any one of the preceding claims, all the magnetic laminations (113) of the stack (2) being identical over the entire length of the stack (2) except possibly for the keepers (110) at the axial ends of the stack (2).

5. Rotor (1) according to any one of the preceding claims, at least one magnetic lamination (113) of the stack (2) having at least one blocking relief (30) that comes to bear against a radially exterior end face (14) of a corresponding electrically conducting bar (10), and better still having two such reliefs (30) that are opposite one another and each come to bear against the same end face (14).

6. Rotor (1) according to any one of the preceding claims, at least one magnetic lamination (113) of the stack (2) having at least one blocking relief (31) that comes to bear against a radially interior end face (13) of a corresponding electrically conducting bar (10), this blocking relief (31) preferably being centred on a median plane (M) of the corresponding opening.

7. Rotor (1) according to any one of the preceding claims, the slots (4) being filled around the electrically conducting bars (10) with a second electrically conducting material (20), preferably aluminium, injected into the slots (4).

8. Rotor (1) according to the preceding claim, the second material (20) extending into each slot (4) both radially inwardly and radially outwardly with respect to the electrically conducting bar (10) contained in this slot (4).

9. Rotor (1) according to Claim 8, the second material (20) coming into contact with the radially interior (14) and radially exterior (13) end faces of the electrically conducting bars (10).

10. Rotor (1) according to any one of the preceding claims, the first material being copper.

11. Rotary electric machine comprising a rotor (1) according to any one of the preceding claims.
